# EUROPEAN PATENT APPLICATION

(11) **EP 2 325 575 A1**
(43) Date of publication of application: **25.05.2011**
(21) Application number: 10425130.1
(22) Date of filing: 22.04.2010
(51) Int. Cl.: F24J 2/05, F24J 2/46, H01J 7/18, H01K 1/54, F04B 37/04

(54) **Improved getter system for hydrogen sensitve device**

(71) Applicant: SAES GETTERS S.p.A., 20020 Lainate (Milano) (IT)
(72) Inventor: Conte, Andrea, 20154 Milano MI (IT); Viale, Luca, 20040 Cavenago di Brianza MB (IT)
(74) Representative: Adorno, Silvano

(57) **Abstract**

Improved solutions for integrating hydrogen getter in powder form within hydrogen sensitive devices, and hydrogen sensitive devices employing such improved solutions. The hydrogen getter system (10) comprises a metallic mesh (11) with closed extremities containing material powders.

## Description

The present invention relates to improved solutions for integrating hydrogen getter in powder form within hydrogen sensitive devices, and hydrogen sensitive devices employing such improved solutions.

With the definition of sensitive devices to the presence of hydrogen or "hydrogen sensitive devices" it is intended devices whose performances or characteristics are degraded by the presence of a certain level of hydrogen, that typically should be less than 10⁻¹ Pa. This pressure value is in any case depending on the type of device and its configuration, and for the least sensitive devices can be up to 1 Pa or higher.

One of the most interesting hydrogen sensitive devices category where the present invention finds a useful application is that of receiving tubes for solar collectors.

Solar collectors are becoming an increasingly important source of alternative energy. In particular, in the field of receiving tubes for solar collectors the presence of hydrogen is harmful since it increases heat conduction from the tubular central body, wherein a heat removing liquid flows, towards the outside of the receiving tube, thus progressively decreasing the efficiency thereof. The problems related to the presence of hydrogen are particularly relevant since the fluid flowing in the central body typically comprises oils which decompose at high temperature thus producing said hydrogen.

Also in the new generation of receiving tubes, which employ a different fluid material in order to remove the heat at higher temperature, the problems of the presence of hydrogen and the consequent deterioration of the device features are of particular relevance since these higher temperatures result in much higher H₂ outgassing from the metal parts of the receiver.

An additional problem within the receiving tubes for the solar collectors is connected to the high temperatures reached inside, which cause the getter material to work in unfavorable conditions as regards the hydrogen sorption capacity, which is inversely proportional with respect to the working temperature. To this end, some technical measures have been developed, such as the one described in patent US 6,832,608 which discloses particular solutions for placing and holding the getter material inside the solar collector, having the purpose of shielding the getter material from solar radiation and from the portions having the highest temperature inside the collector.

The use of getter alloys and of shielding solutions is sufficient for meeting the current requirements in the field of the receiving tubes for solar collectors, but not for assuring the fulfilment of the demands from the new generation of receivers, both in terms of working temperature, which is foreseen that could be higher than 500°C, and in terms of hydrogen capacity of the getter alloy inside the receiving tube of the collector which, in the absence of effective shielding solutions, can be at a temperature very close to the working temperature of the tube.

The solutions for integrating the getters or improving their properties within the receiving tube typically fall into three categories:
- improved getters alloys for hydrogen sorption, such as the ones described in Italian patent application MI2009/A00410 in the applicant's name;
- improved getter positioning within the receiving tubes, such as in the published patent application US 2007/0034204; and
- improved getter holders and their proper placing within the receivers such as described in the above referenced US patent 6,832,608.

These references do not deal with one of the problems given by the hydrogen absorption by the getter material when incorporated in getter devices in consolidated form, such as pills or tablets of compressed powders, that is the embrittlement of the getter due to its absorption of a significant quantity of hydrogen, with the consequence of its fracture and the release of getter materials in form of loose powders. This phenomenon is potentially highly detrimental since released particles of getter powders may scatter through the sensitive device interfering with its normal operation.

The embrittlement typically starts when the getter alloy has absorbed about 2500 Pa l /g, while the most significant detrimental effects are observed upon an absorption of about 5000 Pa l/g.

Also another problem of using the getter material in consolidated form is that its absorption speed is reduced with respect to its use in powder form, since in the first case the total active getter surface area is significantly less readily available.

Aim of the present invention is to provide a solution able to overcome the drawbacks present in the prior art and enabling the use of getter materials in powder forms within hydrogen sensitive devices. In a first aspect thereof the invention consists in a hydrogen getter system comprising a metallic mesh with closed extremities containing getter material powders, characterized in that:
- the metallic mesh openings are comprised between 10 and 200 micron;
- the getter material powders have dimensions comprised between 50 and 3000 micron; and
- the ratio between the smallest dimension of the getter material powders and the mesh size openings is 2 or higher.

In a preferred embodiment such ratio between the smallest dimension of the getter material powders and the mesh size is at least 3.

The invention will be further illustrated with the aid of the annexed drawings, wherein:
- Figure 1 represents a first embodiment of a getter system according to the present invention;
- Figure 2A represents a getter system according to a second alternative embodiment of the invention and figure 2B shows its positioning within a sensitive device; and
- Figure 3A represents a getter system according to a third alternative embodiment, with figure 3B showing its positioning within a sensitive device.

In the drawings the dimensions and dimensional ratio of the depicted elements, with reference for example to the size of the metallic mesh, are not correct but have been altered to improve their readability.

With mesh size it is intended the dimension of the openings of the net whose purpose is the getter powders retaining and that allows an easy access to H₂ for an efficient and fast removal from the internal environment of the sensitive device.

In the technical field such metallic meshes are characterized by a typical number, that is the number of wires per unit of length (the inch being typically used as unit of length) whereby with a 140 mesh is intended a mesh having 140 wires in one inch.

With smallest dimension of the getter material powders it is intended the fact that the powders typically are not spherical and what it is relevant for the present invention is the smallest dimension of the particle, since this is the critical parameter with regard to their retention by the metallic mesh acting as a net, as well as the parameter defining the result of the sieving operations used for the selection of powder particle size.

In fact the particle size of the powders is typically selected by means of two sieving operations after grinding of the getter alloy. In the first sieving operation the particles that have larger dimension are discarded; those are the ones that do not pass through a first sieve with opening S1. This selects all the particles having a sieving diameter below S1. Choosing particles having dimensions below a certain limit S1 guarantees that each getter particle has a sufficiently high surface to volume ratio, i.e. a free surface available for the quick H₂ sorption.

Then these powders are subjected to a second sieving operation using a sieve with opening S2 (<S1), where in this case all the fraction passing through the sieve is discarded. So these operations provide powders having a sieving diameter comprised between S1 and S2.

The correct dimensioning, or, to be more precise, the correct coupling between the metallic mesh of the getter device and the size of the getter powders therein contained is essential for the successful employ of the getter material in powder form within the sensitive device, with particular reference to receiving tubes for solar collectors.

In fact it is not true that the best solution is given by getter devices with a very dense net, i.e. a mesh with small openings (that characterizes the size of the mesh), since in this case it is assured the action of powder retention by the mesh/net, but this compromises the sorption speed by the getter system since the overall gas conductance through the net will be small. Such sorption speed is an important parameter when the hydrogen generation within the sensitive device is not constant but may peak during its normal operation, such as in the case of the receiving tube for solar collectors after few hours of daylight exposure. Therefore the purpose of the first sieving operation is choosing particles with dimensions below S1 in order to select the fraction with the highest sorption speed.

The sorption speed of the getter material, determined by its particle size, is one of the factor influencing the overall sorption speed of the getter system, keeping into account the impact on such fundamental parameter given by the retaining mesh/net of the getter system itself.

On the other side it is also important to balance the requirement of the sorption speed by not using an excessively open metallic mesh for holding the getter powders, the limit thereof being not only given by the smallest dimension of the powders, but a corrective factor of 2 having to be considered to take into account further fragmentation of the getter powders as a consequence of the embrittlement after the H₂ exposure.

The getter devices according to the present invention are typically manufactured starting from a rectangular metallic mesh that is overlapped on its shortest side and soldered or locally welded. The extremities of the net need to be closed separately, and such operation may be done through soldering or a localized welding of the end portion of the mesh or through suitable plug crimping of said portion. The filling with the getter material powders is typically made after the cylinder is formed, before the final closing of the end portion of the mesh.

A rolled mesh typically spans from 100 to 500 mm in length and has a diameter comprised between 5 and 25 mm.

The two ends of the metallic mesh, once closed, are coupled together via coupling means to give the getter system an annular configuration.

In a preferred embodiment, on one of the closed ends/extremities a resilient means, such as a spring is provided and joined to the other end.

The coupling of the ends may also be made by coupling means running alongside or inside the metallic mesh of the getter system.

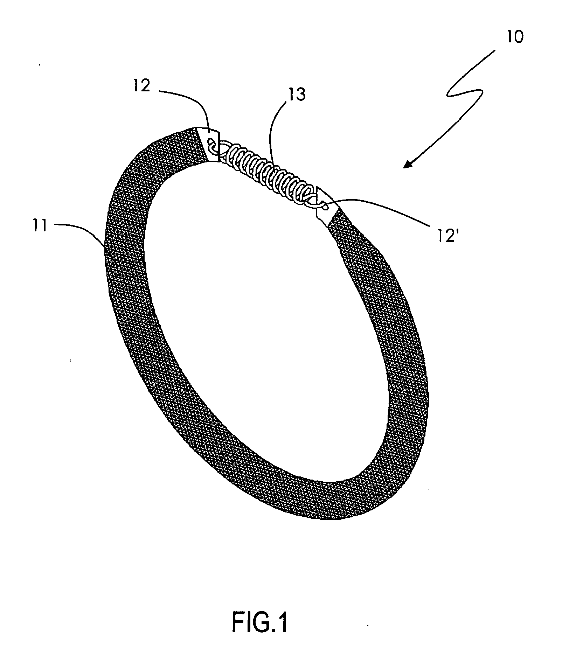

Figure 1 shows a getter system 10 according to the present inventions, formed by a metallic mesh 11 containing a getter material in form of powders (not shown). Both ends of the mesh are closed by plugs 12, 12', that are coupled together by a spring 13.

The annular configuration of the getter system allows to easily mount it within sensitive devices of cylindrical geometry, such in the case of receiving tubes.

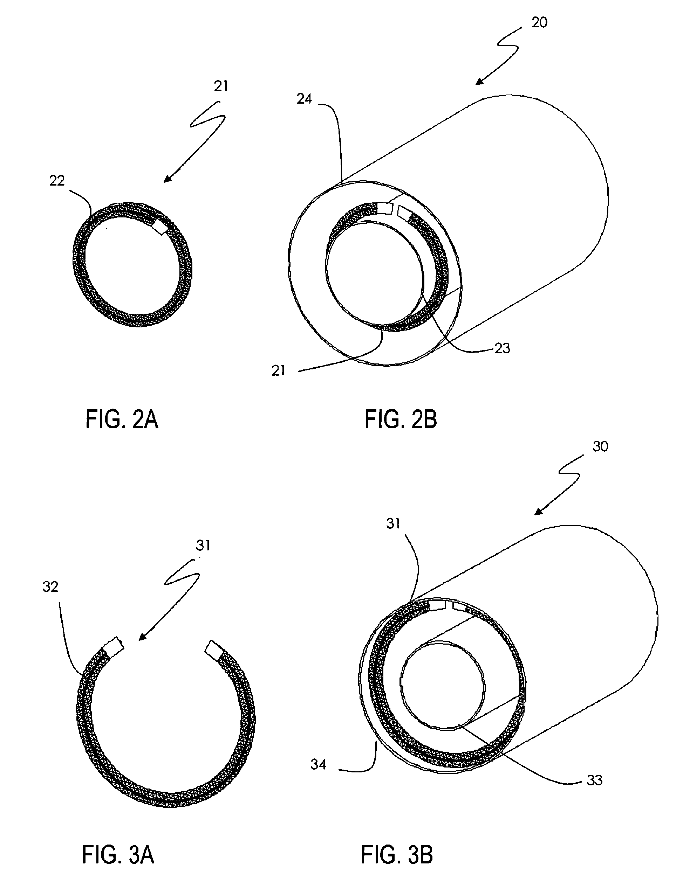

Two different types of elastic means are envisaged depending on whether the getter system needs to be clamped onto the inner tube of the receiver (Fig. 2) or pushed in contact with the outer tube (Fig. 3).

In the first case, where the diameter of the getter device is smaller than the diameter of the component because of the shape "at rest" of the elastic means, an elongation force is applied to the elastic means in order to increase the radius of the annular getter device, and after placing it in the sensitive device it is released and the getter system tightly hold in place by the compression force. In this case the getter device is placed on the outer surface of the inner tube.

This type of solution is schematically represented in figures 2A and 2B. In figure 2A a getter system 21 is shown, with an elastic, superelastic or shape memory wire or strip 22 running alongside the mesh and having the coupling function between the extremities of the getter system. In the preferred embodiment the wire is in the internal part of the mesh.

Figure 2B shows the getter system installed within a receiving tube for solar collector 20, simply depicted showing two of its main constituents, the internal tube 23 where the oil (not shown) flows, and the external tube 24 that constitutes the case of the receiving tube.

In this case the return force of the shape memory element 22 on the metallic mesh firmly fixes the getter system 21 on the internal tube 23.

In the opposite case the getter device is compressed to reduce the radius, and released after having placed it on the sensitive device component.

This type of solution is schematically represented in figures 3A and 3B. In figure 3A a getter system 31 is shown, with an elastic, superelastic or shape memory wire or strip 32 running alongside the mesh. Also in this case the wire is in the internal part of the mesh and has the coupling function between the extremities of the getter system, meaning that the wire and its displacement influences the reciprocal position of the extremities.

Figure 3B shows the getter system installed within a receiving tube for solar collector 30, also in this case schematically represented depicting only two of its main constituents, the internal tube 33 where the oil (not shown) flows, and the external tube 34 that constitutes the case of the receiver.

In this case the elongation force of the shape memory element 32 within the metallic mesh firmly fixes the getter system 31 on the external tube 34.

This solution is the preferred one in case of receiving tubes, since it will easily allow for the placing of the getter device on the outer tube of the receiver, that is the portion at the lowest temperature, condition that allows for the most efficient use of the getter for hydrogen removal.

In a preferred solution the elastic means comprises thermal responsive element or elements, such as shape memory alloy or superelastic elements, and the force exerted solely by the shape transition of the alloy consequent to its heating. It can also be provided a combined system, where for example standard elastic means, such as mechanical springs, are used for a mild anchoring of the getter device on the component, while the shape memory element provides for an extra force firmly holding the getter system in place, when the sensitive device is in use, as a consequence of the rise in temperature during operation.

Getter material powders useful for the present inventions are for example the ones described in US patent 3,203,901 (Zr-Al alloys), US patent 4,306,887 (Zr-Fe alloys), US patent 5,961,750 (Zr-Co-Rare earths alloy). For hydrogen sorption, particularly at high temperatures, it is also known the use of yttrium alloys, as described in the international patent applications WO 2007/148362 and WO 2007/099575, and in the above mentioned Italian patent application MI2009/A00410. The above mentioned getter alloys are the ones preferably used with the present invention, but any hydrogen getter alloy used in powder form may be employed with the inventive concept disclosed.

In a second aspect thereof the invention relates to a hydrogen sensitive device containing a hydrogen getter system comprising a metallic mesh with closed extremities containing getter material powders characterized in that:
- the metallic mesh openings are comprised between 10 and 200 micron;
- the getter material powders have dimensions comprised between 50 and 3000 micron; and
- the ratio between the smallest dimension of the getter material powders and the mesh size is 2 or higher.

In a preferred embodiment the hydrogen sensitive device is a receiver tube for solar collectors, and the getter system comprises elastic means, such as springs, to enable its fixing by elastic force onto a wall of the receiver.

## Claims

1. Hydrogen getter system comprising a metallic mesh with closed extremities containing getter material powders **characterized in that**:
- the metallic mesh openings are comprised between 10 and 200 micron;
- the getter material powders have dimensions comprised between 50 and 3000 micron; and
- the ratio between the smallest dimension of the getter material powders and the mesh size openings is 2 or higher.

2. Hydrogen getter system according to claim 1 wherein said ratio is 3 or higher.

3. Hydrogen getter system according to claim 1 wherein the metallic mesh forms a cylindrical container for said getter material powders.

4. Hydrogen getter system according to claim 3 wherein said cylindrical container has diameter comprised between 5 and 25 mm.

5. Hydrogen getter system according to claim 3 wherein said cylindrical container has a length comprised between 100 and 500 mm.

6. Hydrogen getter system according to claim 1 wherein the closed extremities have coupling means for their reciprocal coupling.

7. Hydrogen getter system according to claim 6 wherein said coupling means are elastic.

8. Hydrogen getter system according to claim 7 wherein the closed extremities coupling comprises one ore more springs.

9. Hydrogen getter system according to claim 8 wherein said spring comprises shape memory elements.

10. Hydrogen getter system according to claim 6 wherein the closed extremities coupling comprises a shape memory or superelastic element.

11. Hydrogen getter system according to claim 10 wherein said coupling further comprises one or more springs.

12. Hydrogen sensitive device comprising a hydrogen getter system comprising a metallic mesh with closed extremities containing getter material powders
**characterized in that**:
- the metallic mesh openings are comprised between 10 and 200 micron;
- the getter material powders have dimensions comprised between 50 and 3000 micron; and
- the ratio between the smallest dimension of the getter material powders and the mesh size openings is 2 or higher.

13. Hydrogen sensitive device according to claim 12 wherein said getter system is hold in place within the sensitive device by elastic forces.

14. Hydrogen sensitive device according to claim 13 wherein said elastic forces are due to a radius increase of the getter system.

15. Hydrogen sensitive device according to claim 13 wherein said elastic forces are due to a radius decrease of the getter system.

16. Hydrogen sensitive device according to claim 12 wherein said device is a receiving tube for solar collector.
